(19) Europäisches Patentamt
European Patent Office
Office européen des brevets

(11) **EP 4 360 178 B1**

(12) **EUROPEAN PATENT SPECIFICATION**

(45) Date of publication and mention
of the grant of the patent:
**17.09.2025 Bulletin 2025/38**

(21) Application number: **22737409.7**

(22) Date of filing: **15.06.2022**

(51) International Patent Classification (IPC):
*H02H 3/02* *(2006.01)*    *H02H 3/44* *(2006.01)*
*H02J 7/00* *(2006.01)*

(52) Cooperative Patent Classification (CPC):
**H02J 7/00304; H02J 7/0031;** H02J 7/0036

(86) International application number:
**PCT/EP2022/066398**

(87) International publication number:
**WO 2022/268616 (29.12.2022 Gazette 2022/52)**

(54) **CHARGING DEVICE COMPRISING A CURRENT SURGE PROTECTION CIRCUIT**

LADEVORRICHTUNG MIT EINER STROMSTOSSSCHUTZSCHALTUNG

DISPOSITIF DE CHARGEMENT COMPRENANT UN CIRCUIT DE PROTECTION CONTRE LA SURINTENSITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2021 EP 21305868**

(43) Date of publication of application:
**01.05.2024 Bulletin 2024/18**

(73) Proprietor: **Device Solutions Inc
Morrisville NC 27560 (US)**

(72) Inventors:
• **LOLLO, Daniel
94160 Saint-Mandé (FR)**
• **VASQUEZ, Pablo
94160 Saint-Mandé (FR)**
• **POLTI, Alexis
94160 Saint-Mandé (FR)**

(74) Representative: **Atout PI Laplace
Immeuble Up On
25 Boulevard Romain Rolland
CS 40072
75685 Paris Cedex 14 (FR)**

(56) References cited:
EP-A1- 2 741 388      EP-A1- 3 093 945
EP-A2- 1 850 443      WO-A1-2020/143975
US-A1- 2015 234 363

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to the field of energy transfer. More particularly, the invention relates to a method for detecting the presence of a foreign conductive object on the charging surfaces of a charging device, which can be used in conductive wireless charging systems.

Wireless power transmission eliminates the use of wires during the charging process of electronic devices, which is more convenient for the users.

Inductive wireless charging, which is one of the known solutions of wireless power transmission, has two disadvantages: firstly, an imperfect alignment between the transmitter and the receiver has an influence on the efficiency of the charge; secondly, the technology requires particular care in the design so as to reduce interferences.

The aforementioned disadvantages are not met with conductive wireless charging. It requires the use of a charging device as a power transmitter to deliver the power, and a reporting device to receive the power.

The charging device is made of conductive charging surfaces (or tiles) monitored by a transmitting circuit, controlled by a detection algorithm and a charge monitoring system. The reporting device is a device equipped with two conductive electrodes, monitored by a receiving circuit, connected to the device's battery.

The technology works through the planar contact between the reporting device's electrodes and the charging device's conductive charging surfaces. The charging device detects the reporting device, communicates with it and activates the appropriate power (maximum current, under a predefined voltage).

The article to be charged may be for example a communication device such as a laptop, a Smartphone, or, more generally, a portable device which comprises a battery which needs to be frequently charged, or a device with no battery that just needs regular supply, such as LED lightning.

The technology has been disclosed in the document WO 2017/046458 A1, which is hereby incorporated by reference. When an article is in planar contact, through the reporting device, with the charging device, two conductive charging surfaces of the charging device (also referred to as tiles) are polarized, which means that there is a potential difference between the supply lines of both conductive charging surfaces.

Therefore, a foreign conductive object, which would be unintentionally laid between the conductive charging surfaces, would capture a part of the current emitted for charging the device, which would therefore create visible phenomena such as sparks.

For example, when the charging device is embedded in a table of a desk, a metallic clip may unfortunately be laid on the same conductive charging surfaces of the table than those which are used for charging the operational unit.

Such a phenomenon is not dangerous for the user, but it is an undesirable effect which should be avoided.

Patent application WO 2013/036947 A2 discloses a foreign object debris detection system for a wireless energy transfer system. The detection of debris relies on sensing the magnetic field of the wireless energy transfer system. The proposed solution is adequate for inductive wireless charging, but could not be applied to conductive wireless charging.

Patent application US 2015/234363 A1 discloses a method for controlling power of an electronic device, which comprises a determination whether power supplied from the power supply unit has an abnormal value.

Hot-swap circuits, which are for example disclosed in the document "Advantages of IC-Based Hot-Swap Circuit Protection" (Tutorials 2158, Maxim Integrated), available under the link https://www.maximintegrated.com/en/design/technical-documents/tutorials/2/2158.html, have built-in and adjustable current limiting which prevents damage to the power supply and which prevents also the circuit being powered during a hot-swap event.

Conductive wireless charging solutions, such as the one disclosed in the document WO 2017/046458 A1, can provide, in specific embodiments of the solution, a voltage between 5 and 20 V, and the operational unit has a nominal consumption of approximately 3 to 5 A, depending on the electrical features of the device.

With this in mind, a hot-swap circuit having an inrush current limit of 1 or 2 A would surely be fast enough to avoid sparks, but the protection would always be triggered for devices to charge having a nominal consumption of approximately 3 to 5 A. Besides, a hot-swap circuit having a higher inrush current limit would have a slower reaction time, which would not avoid the appearance of visible phenomena.

Most of the over-current protection circuits integrate a resistance on the positive or negative line. Therefore, an amplifier must be added with significant voltage and sensibility, bringing complexity and cost very high.

Also, if the foreign object has a high equivalent resistance, it may draw only a few mA which is not enough to be detected by any hot-swap or current surge protection circuit. However, it is enough to overheat a small conductor.

Therefore, there is a need to overcome the aforementioned drawbacks. In particular, there is a need to provide a power supply module for conductive wireless charging, which prevents potential problems such as sparks, with a limited cost and complexity.

It is proposed, according to one aspect of the invention, a charging device according to claim 1.

The invention also relates to a method for preventing visible phenomenon such as sparks from happening according to claim 9.

The accompanying drawings, which are incorporated in and constitute a part of this specification, illustrate various embodiments of the invention and, together with the general description of the invention given above, and the detailed description of the embodiments given below, serve to explain the embodiments of the invention.

The invention is defined by the features of the independent claims.1 and 9 Preferred embodiments are defined in the dependent claims.

Figures 1 illustrates a system for conductive wireless charging, comprising a current surge protection circuit for detecting a foreign conductive object, according to the invention.

Figure 2 illustrates in detail the power supply module according to the invention.

Figure 3 illustrates an implementation of the current surge protection circuit according to the invention.

Figure 4 illustrates an example of the current across the inductor in the current surge protection circuit according to the invention.

Figure 5 illustrates a method according to another embodiment.

Figure 6 illustrates in detail a reporting device.

Figure 7 illustrates a simplified equivalent schematic for detecting a foreign conductive object, according to another embodiment.

Figures 8, 9 and 10 illustrate the negative tile voltage curve for different kinds of foreign conductive objects.

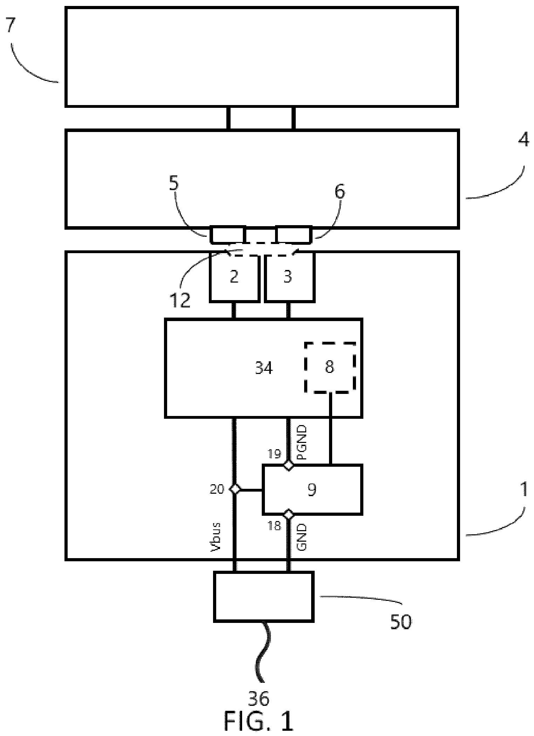

Figure 1 illustrates a charging device 1, which cooperates with a reporting device 4 of a conductive wireless charging system. An AC source 36 provides energy to a power delivering 50.

The "charging device" may embed the power delivering 50, or it may be plugged to a power delivering 50 located outside the charging device.

The charging device 1 comprises at least two conductive charging surfaces 2, 3, and a potential difference between the supply lines of both conductive charging surfaces is applied. On figure 1, the supply lines of the charging surfaces 2, 3 are referred to as Vbus (first supply line) and GND/PGND (second supply line), which means that the first charging surface 2 is polarized with a potential which is higher than the polarization voltage of the second charging surface 3.

The reporting device 4 comprises at least two power terminals 5, 6 so as to have two distinct planar contacts between the power terminal 5 and charging device's charging surface 2, and between the power terminal 6 and charging device's charging surface 3. The contact is said to be planar due to the plane shape of the charging device's charging surface (2, 3). For example, the charging device's charging surface (2, 3) may be a plane surface of a few $mm^2$ or $cm^2$.

The reporting device 4 may be embedded in the article 7. Alternatively, the article 7 may be plugged to an external support which embeds the reporting device 4, as disclosed in the document WO 2017/046458 A1.

The charging device 1 comprises a coupling manager 34 which is equipped with a charging processor 8 which manages the connection detection, the selection of the power line, ground line, communication and sensors.

On figure 1, the charging device 1 comprises a current surge protection circuit 9, but that component is not required for implementing the invented method.

It is not essential that the charging processor 8 is located in the charging device 1. The skilled person could conceive the invention with a charging processor 8 which would be located outside the charging device 1.

When the electrodes 5, 6 of the reporting device 4 are in planar contact with two conductive charging surfaces 2, 3, the coupling manager 34 is noticed that current must be provided to the article 7.

The coupling manager 34 is informed of the power which is required by the article 7, i.e. current and voltage.

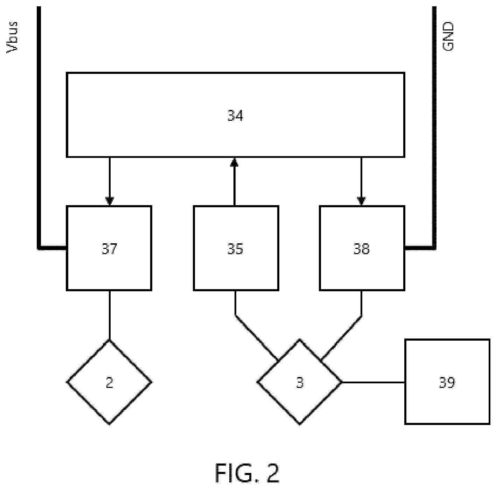

On figure 2, the coupling manager 34 sends a switching signal to the Vbus switch 37 so as to connect the detected conductive charging surfaces 2 to Vbus. The coupling manager 34 also sends a switching signal to the GND switch 38 so as to connect the other detected conductive charging surfaces 3 to GND. Thus, the detected conductive charging surfaces 2,3 are polarized with a differential voltage (Vbus - GND), provided by the AC source 36 through the power delivery adapter 34.

The charging device 1 may also embed an external communication unit 10, so that the user may control the charging process, and connectors 11.

The charging device 1 may also comprise a voltage measure circuit 35, which provides, as a feedback, a voltage of the conductive charging surface.

According to a first embodiment of the invention, the charging device 1 comprises a current surge protection circuit 9 which is configured to stop providing said current if a foreign conductive object 12 is located on the charging surfaces (2, 3), based on a time derivative of said current.

The current surge protection circuit 9 is connected on the GND line, as illustrated on figure 2. The line which connects the current surge protection circuit 9 to the conductive charging surface is referred to as PGND, as illustrated on figure 1.

When a foreign conductive object 12 is located on the charging surfaces, an overcurrent generation which is due to the foreign conductive object 12 must be quickly detected. The invention takes advantage of the fact that electronic devices such as laptops or Smartphones are equipped with a "slow start" hardware that makes their consumption smoothly increase toward its maximum.

Therefore, the current surge protection circuit 9 detects sudden current surges, and interrupts the GND line if need be. A sudden current surge of 3 A, for example, may be detected, even though the device to be charged nominally requests more than 3 A. Thus, the device is not disconnected systematically when current is drawn.

Thus, a foreign conductive object 12 may be distinguished from the article 7, since the foreign conductive object 12 immediately consumes a nominal current, corresponding to its equivalent resistances. Consequently, the time derivative of the current is very strong, with a steep slope which will trigger the interruption of the charging process before the appearance of visible heating phenomenon such as sparks, i.e. within a time lapse of less than 200 ns.

Instead of using a resistor as a shunt, the device uses an inductor. The voltage across the inductor 29 is used as a feedback reaction in order to break the charging process.

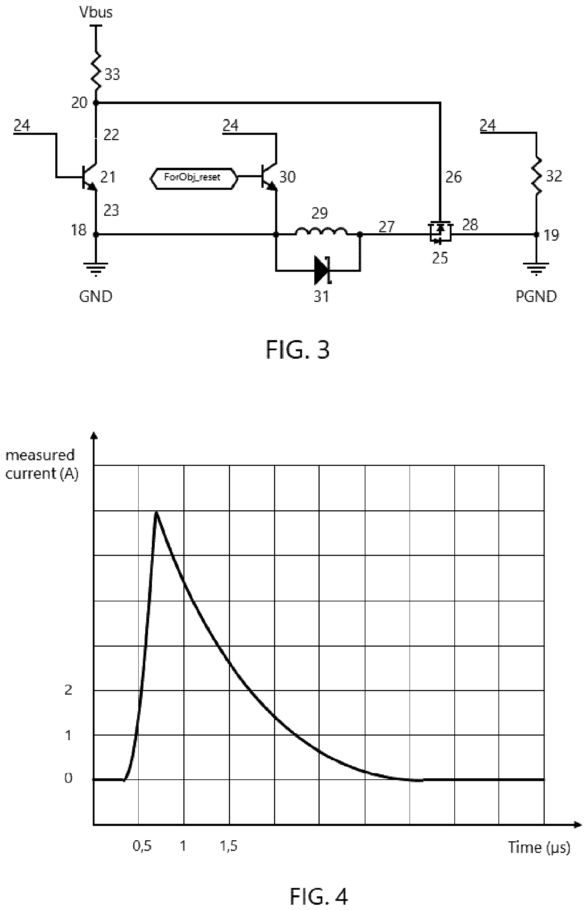

Figure 3 illustrates an implementation of the current surge protection circuit 9. In what follows, the charging surface which is polarized with the supply signal Vbus is referred to as positive charging surface 2, and the other charging surface, which is connected to ground PGND, is referred to as negative charging surface 3.

A first node 18 is electrically connected to ground GND, a second node 19 is electrically connected to the negative tile 3, and a third node 20 is polarized by the supply signal Vbus through a pull-up resistor 33.

The inductor 29 reacts to a current increase going through PGND. If a foreign conductive object 12 with a sufficiently low resistance is placed between the positive charging surface 2 and the negative charging surface 3, it will generate a significant current surge. Thus, the voltage across the inductor 29 sensibly increases, which is proportional to the time derivative of the current across the foreign conductive object 12.

The current surge protection circuit 9 comprises a first switch 21 which is switched on when the voltage across the inductor 29 is high enough to generate a gate current going into the first switch 21 which is higher that its threshold current.

The resistor 33 maintains a positive voltage on the collector 22 of the first switch 21. A high voltage on the first output electrode 23 of the first switch 21, compared to the voltage on the first input electrode 22, will let the current flow between the first node 18 and the third node 20.

In a preferred embodiment, the first switch 21 is a NPN bipolar transistor (or N bipolar transistor). In that case, the first input electrode 22 is a collector, the first output electrode 23 is an emitter, and the first control electrode 24 is a base.

The first input electrode 22 of the first switch 21 is pulled high to the voltage Vbus.

The current surge protection circuit 9 also comprises a second switch 25. The second control electrode 26 is electrically connected to the third node 20. The second output electrode D-25 is electrically connected to the second node 19, and the second input electrode 27 is connected to the inductor 29.

The second switch 25 is switched off when the first switch 21 is switched on, since the absolute value of the voltage between the second control electrode 26 and the second input electrode 27 is lower than the gate voltage Vgsth. Closing the second switch 25 disconnects the negative charging surface 3 with regards to the GND line, and stops the charge. In figure 4, we can see that approximately 300 ns after the foreign object is placed, the current curve goes down again.

The second switch 25 may be an NPN-type MOSFET transistor. In that case, the second control electrode 26 is a gate, the second input electrode 28 is a source, and the second output electrode 27 is a drain.

A resistor 32 is also electrically connected between the second node 19 (PGND) and the first control electrode 24 of the first switch 21, so as to make the first switch 21 switch when the voltage across the inductor 29 goes above a certain threshold.

As illustrated by figure 4, which depicts the current in the negative tile, which is measured by a multimeter, the current curve rises suddenly when a foreign conductive object 12 with low resistance (3.5 Ω in the example of figure 4) lies on the conductive surfaces, and the PGND voltage increases proportionally to the time derivative of the current curve. Then, it takes 3,5 μs to completely eliminate the overcurrent of 6 A due to the presence of the foreign conductive object 12. This is due to remanent inductive energy in the charging path (cable, cooper lines etc.).

The first switch 21, the second switch 25, and the inductor 29 are dimensioned so that the provision of the current is stopped for a foreign conductive object 12 having an equivalent resistance up to a predefined value.

The skilled person may choose components for preventing the appearance of visible phenomenon such as sparks in less than 300 ns, for a foreign conductive object 12 having an equivalent resistance lower than 40 Ω, under a voltage Vbus of 20 V. In particular, the resistors and inductor values may be selected in order to compensate intrinsic parameters of the first and second switch.

The current surge protection circuit 9 advantageously does not comprise any capacitors on PGND lines, other than the parasitic ones, thus it does not store any energy which would otherwise be released, thereby provoking visible phenomenon such as sparks.

Once the protection has been activated, it needs to be reset, so that the charging process would not be delayed.

The current surge protection circuit 9 may include a third switch 30 which switches off the first switch 21, thus the second switch 25 is switched on, once the foreign conductive object 12 has been removed from the conductive charging surfaces, allowing the current to flow again between GND and PGND.

The third switch 30 may be a bipolar NPN transistor. Its collector is electrically connected to the first control electrode 24 of the first switch 21, and its emitter is electrically connected to the first node 18.

The charging processor 8, which is illustrated by figure 2, may have an output (ForObj_reset, figure 3) connected to the base of the third switch 30. The charging processor 8 may receive the information of removal of the foreign conductive object 12 based on a sensing means, or based on external communication. For example, the user may indicate to the charging processor 8 that the foreign conductive object 12 has been removed. Alternatively, a matrix detection system may be used, such as the one disclosed in the document EP 3 425 764 A1.

Alternatively, the charging device 1 may include a timer for controlling the reset of the current surge protection circuit 9. The timer may be advantageously managed by the coupling manager 34.

When the current which flows between the first node 18 and the second node 19 is suddenly interrupted, the inductor 29 has a sudden decrease of current over time (going from 7A to 0A for example), so it compensates it with a negative voltage (derivative is negative). Thus, the voltage may go very low and could damage the first switch 21.

In order to avoid that, a freewheeling diode 31 may be connected across the inductor 29, the anode being connected to the first node 18, and the cathode being connected to the second input electrode 27 of the second switch 25. By this, the reverse current is allowed to flow through the diode 31 and dissipates.

In a preferred embodiment, the diode 31 is a Schottky diode, since it has a particularly low forward voltage drop and a very fast switching behavior in reverse bias.

In the foregoing, a current surge protection circuit 9 has been disclosed, for quickly breaking the GND line. The current surge protection circuit 9 is designed to disconnect the operational unit 7 before the occurrence of sparks, which typically happens if the foreign conductive object FCO has a low equivalent resistance (typically a few dozen ohms, depending on the calibration of the current surge protection circuit 9).

If the foreign conductive object 12 has a higher equivalent resistance, it will generate a lower current surge and no visible phenomenon, but the charging process still needs to be interrupted, in order to avoid an excessive heating of the foreign conductive object 12. Therefore, the protection can be slower to react.

In another embodiment, a procedure may be implemented by the coupling manager 34, in order to detect a foreign conductive object which has a higher equivalent resistance.

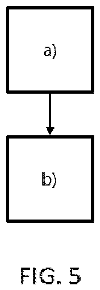

In a first step a) of the method (figure 5), an appropriate power is provided to the conductive charging surfaces (2, 3). The appropriate power (current and voltage) is determined by the coupling manager 34, based on a communication between the article 7 and the coupling manager 34.

In a second step b) (figure 5), the coupling manager 34 puts one of the charging surfaces (2, 3) in a determined high impedance state, which means that one of the charging surfaces (2, 3) is disconnected from the GND or Vbus line, depending on the considered charging surfaces (2, 3). For that, the coupling manager 34 sends a switching signal to the Vbus switch 37 or to the GND switch 38 (figure 2). During the time lapse of a determined impedance state (such as high impedance), the coupling manager 34 measures a voltage across the charging surface (2, 3), by means of a voltage measure circuit 35.

In a preferred embodiment of the invention, illustrated by figure 2, the voltage across the negative charging surface is converted in a digital signal so that the coupling manager 34 derives the presence of the foreign conductive object 12 based on the digital signal.

In a preferred embodiment, the determined impedance state is a relatively high impedance state, compared to the impedance of the reporting device 4, and to the impedance of the foreign conductive object 12.

In another embodiment, the charging surfaces (2, 3) is cyclically put in a determined impedance state.

The determined impedance state is obtained by means of a Thevenin impedance adapter 39, which is a component which defines the impedance of the charging surface when the latter is neither connected to Vbus or GND, nor to any foreign electrical circuit.

For example, every 100 ms, the negative charging surface, i.e. the one which is connected to the GND line, is disconnected from PGND during 10 $\mu$s. The procedure is implemented at a cycle of 0.01 %. Therefore, the disconnection is very fast, and the duty cycle (time span of determined impedance state vs. time span of connection) is determined such that the charging process is not stopped.

Besides, the devices to be charged usually have internal capacitors in case of micro-voltage drops, thus the invented method is transparent for the operational unit.

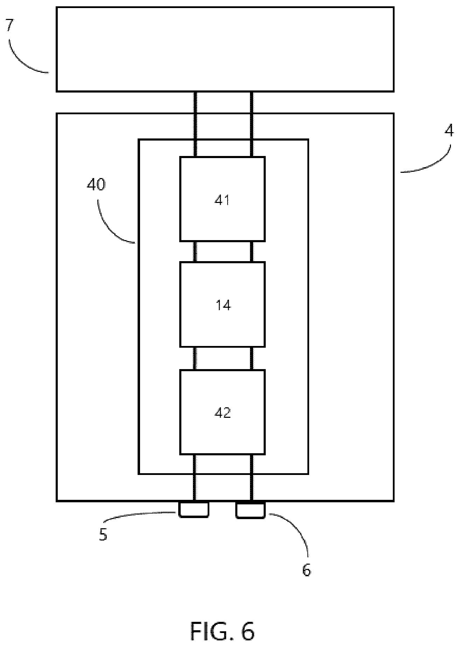

The method takes advantage of the internal structure of the reporting device 4, as illustrated by figure 6. The reporting device 4 comprises a circuit 40 for managing the inputs and outputs of the reporting device 4.

Indeed, the reporting device 4 is equipped with an impedance blocker 14 between the two power terminals (5, 6) and the rest of the receiver circuit 41. The impedance blocker 14 disconnects the downstream circuit during the determined impedance state.

Therefore, between both power terminals (5, 6), the equivalent impedance is constant, regardless of the article 7 located down the impedance blocker 14. The impedance controlled receiver circuit 42 which is located down the impedance blocker 14, advantageously comprises a set of at least one other protection unit, such as an over voltage protection unit, a reverse voltage protection unit, an electrostatic discharge protection unit.

In that way, the voltage curve across one of the charging surface (2, 3) can be calibrated by the predetermined value of the equivalent impedance between both power terminals (5, 6) (calibration step).

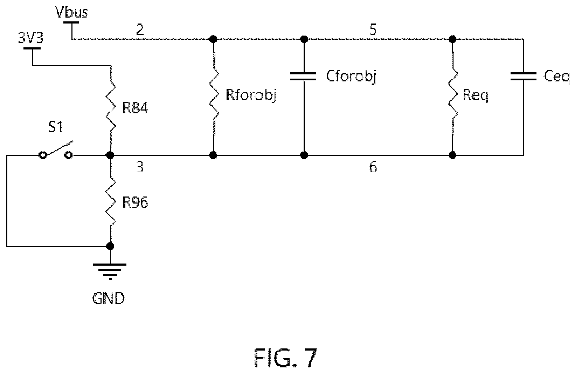

Figure 7 schematically illustrates an equivalent circuit of the foreign conductive object 12 in parallel with the set of at least one other protection unit.

The foreign conductive object 12 has an equivalent resistance $R_{forobj}$ and an equivalent capacitance $C_{forobj}$, whereas the set of at least one other protection unit has an equivalent resistance Req and an equivalent capacitance Ceq.

Resistors R84 and R96 are composing the Thevenin impedance adapter. Resistor R84 is arranged between the negative charging surface 3 and a predetermined voltage such as 3V3.

Resistor R96 is arranged between the negative charging surface 3 and GND. A similar Thevenin impedance adapter may be arranged on the positive charging surface 2, with the required adaptations.

The switch S1 is located on the GND line (cf. figure 2), so as to put the negative charging surface 3 in the determined impedance state (for example by doing it cyclically).

When the charging device 1 places the negative charging surface 3 in the determined impedance state, the Thevenin impedance adapter 39 (resistors R84 and R96) is still connected to the charging surface 3.

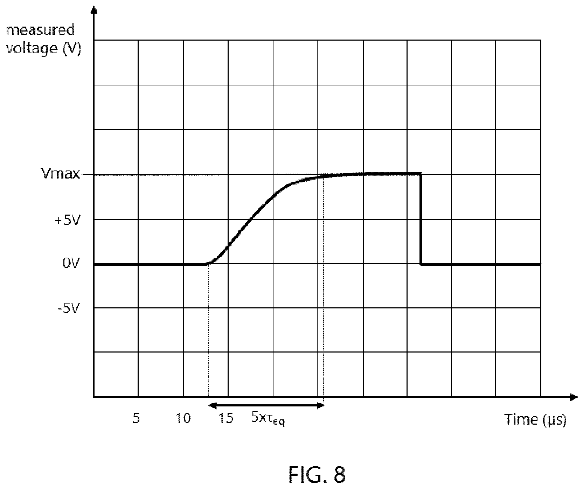

Figure 8 illustrates the voltage curve of the negative conductive charging surface when there is no foreign conductive object 12, during one cycle of switching off the switch S1 for the negative charging surface, which is otherwise connected to GND.

The negative tile voltage curve has local maxima and minima, but it can be interpolated so as to match the capacitor voltage step response of a RC circuit, with a time constant $\tau_{eq}$ which equals Req x Ceq. The time constant $\tau$ can be easily computed by sampling the negative tile voltage. It is reminded that V = Vmax when t = $5\tau_{eq}$ (V = Vmax is an approximation, since V = 0,993 x Vmax), V being the measured voltage, and Vmax being the asymptotic value of the voltage, which can be computed based on the plateau of the curve

$$Vmax = V_{bus} \times \frac{R_{96}}{R_{96} + \cfrac{1}{1 + \cfrac{1}{R_{84}} + \cfrac{1}{R_{forobj}} + \cfrac{1}{R_{eq}}}}$$

The calibration of the method is done once and for all when there is no foreign conductive object 12 on the conductive charging surfaces, or it can be done on a regular basis, so as to take the component's ageing into account.

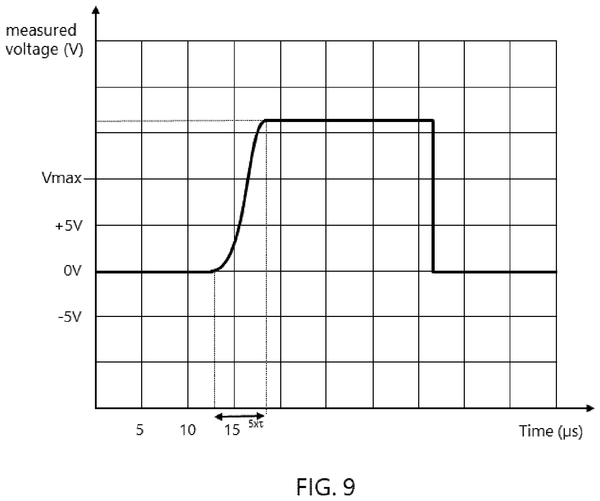

Figure 9 illustrates the voltage curve of the negative conductive charging surface when a foreign conductive object 12 having an equivalent resistance of 1 kΩ is placed between two conductive charging surfaces.

The time constant $\tau$ can be computed for example by considering the fact that V = $V_0$ when t = $5\tau$. Thus, when the voltage reaches the plateau, a time interval between the start of the rise of the curve and the start of the plateau is determined, which equals $5\tau$.

Considering that $\tau$ = (Ceq+$C_{forobj}$)/(1/Req+1/$R_{forobj}$), it can be determined that a foreign conductive object 12 is present on the conductive charging surfaces if the value of $\tau$ is different from the calibration value $\tau_{eq}$. There is no need to compute the values of $R_{forobj}$ and $C_{forobj}$; what is essential is the computation of the time constant or of the asymptotic voltage, so as to assess if it is different from the calibration value.

In another embodiment, an average value of the voltage across the charging surface 3 may also be computed, and compared to the value during the calibration step.

In the case of figure 9, the foreign conductive object 12 is a resistor, which explains that the maximum curve value is higher than the maximum curve value of the voltage curve of the negative conductive charging surface when there is no foreign conductive object 12 (figure 8).

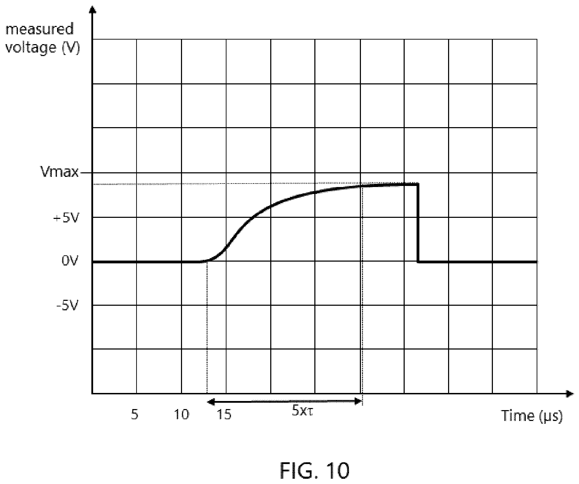

Figure 10 illustrates the voltage curve of the negative conductive charging surface when an exclusive capacitive foreign conductive object 12 is located on the charging surfaces. The maximum curve value is identical than the maximum curve value of the calibration curve of figure 8, but the slope is steeper. Thus, the value of $\tau$ is different than $\tau_{eq}$, which indicates the presence of a foreign conductive object 12.

In a preferred embodiment of the invention, it may be decided that a foreign conductive object 12 is present if $\tau \neq \tau_{eq}$. A tolerance margin may be used, for example of 10 %, so as to take the measurement noise into account.

The disconnection of the conductive charging surface may be cyclically implemented, which is transparent for the operational unit, as described above. Besides, the method does not require any modification of the hardware. The charging processor 8 can be updated so as to cyclically send a switching signal on the GND line or on Vbus.

If the charging processor 8 determines that a foreign conductive object 12 is located on the charging surfaces of the charging device 1, based on the comparison of the voltage temporal evolution with regards to the calibration voltage temporal evolution, the charging processor 8 may break the charging process, until the foreign conductive object 12 is removed.

The first embodiment (current surge protection circuit) and the second embodiment (cyclical test) can be combined.

Indeed, the current surge protection circuit reacts quickly, and the charging process is interrupted, if the equivalent resistance of the foreign conductive object 12 is smaller than a predefined value, for example 40 $\Omega$. Beyond the predefined value, it is unlikely that visible phenomenon such as sparks may be generated: under a voltage of 20 V, the current which would flow in the foreign conductive object 12 would be less than 500 mA, which may not be sufficient to generate visible phenomenon such as sparks (i.e. visible to the human eye). However, the charging process would still be interrupted, based on the second embodiment.

The invention also relates to a method for transferring power supply information from the reporting device 4 to the charging device 1.

The method comprises a first step a') of charging an electronic device according to predefined power supply requirements, the electronic device being charged by the charging device 1 through the reporting device 4. For sake of brevity, the operation mode for charging the electronic device is not repeated, and the skilled person may refer to what precedes.

In a second step b'), one of the charging surfaces (2, 3) is put in a determined high impedance state, by using the switch S1. Putting the negative charging surfaces in the determined impedance is preferred, since switching on and off the GND line has less consequence on the charging process than switching on and off Vbus.

The charging surfaces (2, 3) is advantageously cyclically put in a determined impedance state.

As indicated above, when the charging surface is disconnected, the coupling manager 34acquires the voltage evolution of the disconnected charging surface, which depends on the equivalent resistance Req and the equivalent capacitance Ceq of the set of at least one other protection unit (cf. figure 7).

According to the method, the reporting device 4 comprises a set of at least one extra component such as a capacitor and/or a resistor, which can be dynamically and sequentially connected between the electrodes (5, 6), upstream from the impedance blocker 14.

Depending on the selected extra component, the voltage curve of the disconnected charging surface will be different in the determined impedance state, thus the time constant $\tau$ and the maximum voltage Vmax will be different.

If the article 7 dynamically needs, during the charging process, to modify the power supply requirements (for example the required voltage, the voltage range, the peak current), it may accordingly advise the receiver circuit 40 of the reporting device 4, which in turn selects an extra component.

Any other information going from the article 7 to the charging device 1 during the charge, can be transferred this way.

Therefore, the charging features can be dynamically adapted.

It will be understood that the invention is not specific to plate charging surfaces. It might work equally with any two pin power supply connection.

**Claims**

1. Charging device (1), comprising a plurality of conductive charging surfaces (2, 3) configured to cooperate with a reporting device (4) equipped at least with two power terminals (5, 6) so as to have a planar contact between the at least two power terminals (5, 6) and at least two of the charging device's plurality of conductive charging surfaces (2, 3), the charging device (1) being configured to provide a current with a predetermined voltage to an article (7) to be charged through the at least two of the plurality of conductive charging surfaces (2, 3), the at least two power terminals (5, 6) and the reporting device (4), the charging device (1) comprising a current surge protection circuit (9), **characterized in that** the current surge protection circuit (9) is configured to stop providing current if a foreign conductive object (12) is located on the at least two of the plurality of conductive charging surfaces (2, 3), based on a time derivative of said current,

   wherein the charging device is configured to provide a supply signal (Vbus) to one of the at least two of the plurality of conductive charging surfaces, referred to as positive charging surface (2), wherein the current surge protection circuit (9) further comprises:

- a first node (18) which is electrically connected to ground (GND) ;
- a second node (19) which is electrically connected to another charging surface among the at least two of the plurality of conductive charging surfaces, referred to as negative charging surface (3) ;
- a third node (20) which is polarized by the supply signal (Vbus) through a pull-up resistor (33);

**characterized in that** the current surge protection circuit (9) further comprises:

- an inductor (29) configured to generate a voltage between the first node (18) and the second node (19), which is proportional to the time derivative of the current;
- a first switch (21) which is configured to be switched based on the voltage between the first node (18) and the second node (19), when said voltage is greater than the threshold voltage of the first switch (21);
- a second switch (25) which is configured to be switched off when the first switch (21) is switched on;

the first switch (21), the second switch (25) and the inductor (29) being dimensioned so that the provision of the current is stopped for a foreign conductive object (12) having an equivalent resistance up to a predefined value.

2. Charging device according to claim 1, wherein:

- the first switch (21) comprises a first input electrode (22) which is electrically connected to the third node (20), a first output electrode (23) which is electrically connected to the first node (18), and a first control electrode (24) which is electrically connected to the second node (19);
- the second switch (25) comprises a second control electrode (26) which is electrically connected to the third node (20), a second input electrode (28) which is electrically connected to the inductor (29), and a second output electrode (27) which is electrically connected to second node (19).

3. Charging device according to claim 2, wherein:

- the first switch (21) is a NPN-type bipolar transistor, the first input electrode (22) being a collector , the first output electrode (23) being an emitter , and the first control electrode (24) being a base ;
- the second switch (25) is an NPN-type MOSFET transistor, the second control electrode (26) being a gate (B-Q54), the second input electrode (28) being a source, and the second output electrode (27) being a drain.

4. Charging device according to any of claims 2 or 3, comprising a third switch (30) which is configured to electrically connect the first control electrode (24) of the first switch (21) to the first node (18) allowing to switch off the first switch (21), thereby switching on the second switch (25).

5. Charging device according to claim 4, comprising a charging processor (8) which is configured to control a reset of the current surge protection circuit (9).

6. Charging device according to claim 5, wherein the charging processor (8) is configured to detect whether the foreign conductive object (12) has been removed from the charging surfaces (2, 3), and to switch on the first switch (21) and the second switch (25) if there is no remaining foreign conductive object (12) on the charging surfaces (2, 3).

7. Charging device according to claim 4, wherein the third switch (30) comprises a timer which is configured to control a reset of the current surge protection circuit (9).

8. Charging device according to any of claims 1 to 7, wherein the current surge protection circuit (9) comprises a diode (31) which is connected across the inductor (29).

9. Method for preventing visible phenomenon such as sparks from happening, for a charging device (1) according to any of the preceding claims,

said method comprising the steps of:

- providing a current with a predetermined voltage to two of the plurality of conductive charging surfaces (2, 3);

- generating a voltage between the first node (18) and the second node (19), which is proportional to the time derivative of the current;
- switching on the first switch (21) when said voltage is greater than a threshold voltage of the first switch (21);
- switching off the second switch (25) when the first switch (21) is switched on;
- stopping providing said current,

the first switch (21), the second switch (25) and the inductor (29) being dimensioned so that the provision of the current is stopped for a foreign conductive object (12) having an equivalent resistance up to a predefined value.

**Patentansprüche**

1. Ladevorrichtung (1), umfassend eine Vielzahl von leitenden Ladeoberflächen (2, 3), die dazu konfiguriert sind, mit einer Berichtsvorrichtung (4) zusammenzuarbeiten, die mit mindestens zwei Energieanschlüssen (5, 6) ausgestattet ist, um ebenen Kontakt zwischen den mindestens zwei Energieanschlüssen (5, 6) und mindestens zwei der Vielzahl von leitenden Ladeoberflächen (2, 3) der Ladevorrichtung zu haben, wobei die Ladevorrichtung (1) dazu konfiguriert ist, sind, einem zu ladenden Artikel (7) einen Strom mit einer vorbestimmten Spannung durch die mindestens zwei der Vielzahl von leitenden Ladeoberflächen (2, 3), die mindestens zwei Energieanschlüsse (5, 6) und die Berichtsvorrichtung (4) bereitzustellen, wobei die Ladevorrichtung (1) eine Stromstoßschutzschaltung (9) umfasst, **dadurch gekennzeichnet, dass** die Stromstoßschutzschaltung (9) dazu konfiguriert ist, das Bereitstellen von Strom zu beenden, falls sich ein fremdes leitendes Objekt (12) auf den mindestens zwei der Vielzahl von leitenden Ladeoberflächen (2, 3) befindet, basierend auf einer Zeitableitung des Stroms,

   wobei die Ladevorrichtung dazu konfiguriert ist, ein Einspeisesignal (Vbus) an eine der mindestens zwei der Vielzahl von leitenden Ladeoberflächen bereitzustellen, bezeichnet als positive Ladeoberfläche (2), wobei die Stromstoßschutzschaltung (9) ferner Folgendes umfasst:

   - einen ersten Knoten (18), der elektrisch mit der Masse verbunden ist (GND);
   - einen zweiten Knoten (19), der elektrisch mit einer anderen Ladeoberfläche aus den mindestens zwei der Vielzahl von leitenden Ladeoberflächen verbunden ist, bezeichnet als negative Ladeoberfläche (3);
   - einen dritten Knoten (20), der durch das Einspeisesignal (Vbus) durch einen Pullup-Widerstand (33) polarisiert ist;

   **dadurch gekennzeichnet, dass** die Stromstoßschutzschaltung (9) ferner Folgendes umfasst:

   - einen Induktor (29), der dazu konfiguriert ist, eine Spannung zwischen dem ersten Knoten (18) und dem zweiten Knoten (19) zu erzeugen, die proportional zu der Zeitableitung des Stroms ist;
   - einen ersten Schalter (21), der dazu konfiguriert ist, basierend auf der Spannung zwischen dem ersten Knoten (18) und dem zweiten Knoten (19) umgeschaltet zu werden, wenn die Spannung größer ist als die Schwellenwertspannung des ersten Schalters (21);
   - einen zweiten Schalter (25), der dazu konfiguriert ist, ausgeschaltet zu werden, wenn der erste Schalter (21) angeschaltet ist;

   wobei der erste Schalter (21), der zweite Schalter (25) und der Induktor (29) so dimensioniert sind, dass die Bereitstellung des Stroms für ein fremdes leitendes Objekt (12), das einen äquivalenten Widerstand bis zu einem vordefinierten Wert aufweist, beendet wird.

2. Ladevorrichtung nach Anspruch 1, wobei:

   - der erste Schalter (21) eine erste Eingangselektrode (22), die elektrisch mit dem dritten Knoten (20) verbunden ist, eine erste Ausgangselektrode (23), die elektrisch mit dem ersten Knoten (18) verbunden ist, und eine erste Steuerelektrode (24), die elektrisch mit dem zweiten Knoten (19) verbunden ist, umfasst;
   - der zweite Schalter (25) eine zweite Steuerelektrode (26), die elektrisch mit dem dritten Knoten (20) verbunden ist, eine zweite Eingangselektrode (28), die elektrisch mit dem Induktor (29) verbunden ist, und eine zweite Ausgangselektrode (27), die elektrisch mit dem zweiten Knoten (19) verbunden ist, umfasst.

3. Ladevorrichtung nach Anspruch 2, wobei:

- der erste Schalter (21) ein Bipolartransistor vom NPN-Typ ist, wobei die erste Eingangselektrode (22) ein Stromabnehmer ist, wobei die erste Ausgangselektrode (23) ein Strahler ist, und wobei die erste Steuerelektrode (24) eine Basis ist;
- der zweite Schalter (25) ein MOSFET-Transistor vom NPN-Typ ist, wobei die zweite Steuerelektrode (26) ein Gate (B-Q54) ist, wobei die zweite Eingangselektrode (28) eine Source ist, und wobei die zweite Ausgangselektrode (27) ein Drain ist.

4. Ladevorrichtung nach einem der Ansprüche 2 oder 3, umfassend einen dritten Schalter (30), der dazu konfiguriert ist, die erste Steuerelektrode (24) des ersten Schalters (21) elektrisch mit dem ersten Knoten (18) zu verbinden, was es gestattet, den ersten Schalter auszuschalten (21), wodurch der zweite Schalter (25) eingeschaltet wird.

5. Ladevorrichtung nach Anspruch 4, umfassend einen Ladeprozessor (8), der dazu konfiguriert ist, ein Zurücksetzen der Stromstoßschutzschaltung (9) zu steuern.

6. Ladevorrichtung nach Anspruch 5, wobei der Ladeprozessor (8) dazu konfiguriert ist, zu erkennen, ob das fremde leitende Objekt (12) von den Ladeoberflächen (2, 3) entfernt worden ist, und den ersten Schalter (21) und den zweiten Schalter (25) einzuschalten, falls kein verbleibendes fremdes leitendes Objekt (12) auf den Ladeoberflächen (2, 3) ist.

7. Ladevorrichtung nach Anspruch 4, wobei der dritte Schalter (30) einen Timer umfasst, der dazu konfiguriert ist, ein Zurücksetzen der Stromstoßschutzschaltung (9) zu steuern.

8. Ladevorrichtung nach einem der Ansprüche 1 bis 7, wobei die Stromstoßschutzschaltung (9) eine Diode (31) umfasst, die über den Induktor (29) verbunden ist.

9. Verfahren zum Verhindern des Vorkommens eines sichtbaren Phänomens, wie etwa Funken, für eine Ladevorrichtung (1) nach einem der vorhergehenden Ansprüche, wobei das Verfahren die folgenden Schritte umfasst:

- Bereitstellen eines Stroms mit vorbestimmter Spannung an zwei der Vielzahl von leitenden Ladeoberflächen (2, 3);
- Erzeugen einer Spannung zwischen dem ersten Knoten (18) und dem zweiten Knoten (19), die proportional zu der Zeitableitung des Stroms ist;
- Einschalten des ersten Schalters (21), wenn die Spannung größer ist als eine Schwellenwertspannung des ersten Schalters (21);
- Ausschalten des zweiten Schalters (25), wenn der erste Schalter (21) eingeschaltet ist;
- Beenden des Bereitstellens des Stroms,

wobei der erste Schalter (21), der zweite Schalter (25) und der Induktor (29) so dimensioniert sind, dass die Bereitstellung des Stroms für ein fremdes leitendes Objekt (12), das einen äquivalenten Widerstand bis zu einem vordefinierten Wert aufweist, beendet wird.

**Revendications**

1. Dispositif de charge (1), comprenant une pluralité de surfaces de charge conductrices (2, 3) configurées pour coopérer avec un dispositif de signalement (4) équipé d'au moins deux bornes de puissance (5, 6) de sorte à avoir un contact planaire entre les au moins deux bornes de puissance (5, 6) et au moins deux de la pluralité de surfaces de charge conductrices (2, 3) du dispositif de charge, le dispositif de charge (1) étant configuré pour fournir un courant avec une tension prédéterminée à un article (7) à charger à travers les au moins deux de la pluralité de surfaces de charge conductrices (2, 3), les au moins deux bornes de puissance (5, 6) et le dispositif de signalement (4), le dispositif de charge (1) comprenant un circuit de protection contre les surtensions (9), **caractérisé en ce que** le circuit de protection contre les surtensions (9) est configuré pour arrêter la fourniture de courant si un objet conducteur étranger (12) est situé sur les au moins deux de la pluralité de surfaces de charge conductrices (2, 3), sur la base d'une dérivée temporelle dudit courant,

dans lequel le dispositif de charge est configuré pour fournir un signal d'alimentation (Vbus) à l'une des au moins deux de la pluralité de surfaces de charge conductrices, désignée comme surface de charge positive (2), dans lequel le circuit de protection contre les surtensions (9) comprend en outre :

- un premier nœud (18) qui est électriquement connecté à la terre (GND) ;
- un deuxième nœud (19) qui est électriquement connecté à une autre surface de charge parmi les au moins deux de la pluralité de surfaces de charge conductrices, désignée comme surface de charge négative (3) ;
- un troisième nœud (20) qui est polarisé par le signal d'alimentation (Vbus) à travers une résistance de rappel vers le niveau haut (33) ;

**caractérisé en ce que** le circuit de protection contre les surtensions (9) comprend en outre :

- un inducteur (29) configuré pour générer une tension entre le premier nœud (18) et le deuxième nœud (19), qui est proportionnelle à la dérivée temporelle du courant ;
- un premier interrupteur (21) qui est configuré pour être basculé sur la base de la tension entre le premier nœud (18) et le deuxième nœud (19), lorsque ladite tension est supérieure à la tension de seuil du premier interrupteur (21) ;
- un deuxième interrupteur (25) qui est configuré pour être éteint lorsque le premier interrupteur (21) est allumé ;

le premier interrupteur (21), le deuxième interrupteur (25) et l'inducteur (29) étant dimensionnés de sorte que la fourniture du courant est arrêtée pour un objet conducteur étranger (12) ayant une résistance équivalente jusqu'à une valeur prédéfinie.

2. Dispositif de charge selon la revendication 1, dans lequel :

- le premier interrupteur (21) comprend une première électrode d'entrée (22) qui est électriquement connectée au troisième nœud (20), une première électrode de sortie (23) qui est électriquement connectée au premier nœud (18), et une première électrode de commande (24) qui est électriquement connectée au deuxième nœud (19) ;
- le deuxième interrupteur (25) comprend une deuxième électrode de commande (26) qui est électriquement connectée au troisième nœud (20), une deuxième électrode d'entrée (28) qui est électriquement connectée à l'inducteur (29), et une deuxième électrode de sortie (27) qui est électriquement connectée au deuxième nœud (19).

3. Dispositif de charge selon la revendication 2, dans lequel :

- le premier interrupteur (21) est un transistor bipolaire de type NPN, la première électrode d'entrée (22) étant un collecteur, la première électrode de sortie (23) étant un émetteur, et la première électrode de commande (24) étant une base ;
- le deuxième interrupteur (25) est un transistor MOSFET de type NPN, la deuxième électrode de commande (26) étant une grille (B-Q54), la deuxième électrode d'entrée (28) étant une source, et la deuxième électrode de sortie (27) étant un drain.

4. Dispositif de charge selon l'une quelconque des revendications 2 ou 3, comprenant un troisième interrupteur (30) qui est configuré pour connecter électriquement la première électrode de commande (24) du premier interrupteur (21) au premier nœud (18) permettant d'éteindre le premier interrupteur (21), allumant ainsi le deuxième interrupteur (25).

5. Dispositif de charge selon la revendication 4, comprenant un processeur de charge (8) qui est configuré pour commander une réinitialisation du circuit de protection contre les surtensions (9).

6. Dispositif de charge selon la revendication 5, dans lequel le processeur de charge (8) est configuré pour détecter si l'objet conducteur étranger (12) a ou n'a pas été retiré des surfaces de charge (2, 3), et pour allumer le premier interrupteur (21) et le deuxième interrupteur (25) s'il ne reste aucun objet conducteur étranger (12) sur les surfaces de charge (2, 3).

7. Dispositif de charge selon la revendication 4, dans lequel le troisième interrupteur (30) comprend un minuteur qui est configuré pour commander une réinitialisation du circuit de protection contre les surtensions (9).

8. Dispositif de charge selon l'une quelconque des revendications 1 à 7, dans lequel le circuit de protection contre les surtensions (9) comprend une diode (31) qui est connectée à travers l'inducteur (29).

9. Procédé de prévention de l'occurrence d'un phénomène visible tel que des étincelles, pour un dispositif de charge (1) selon l'une quelconque des revendications précédentes, ledit procédé comprenant les étapes consistant à :

- fournir un courant avec une tension prédéterminée à deux de la pluralité de surfaces de charge conductrices (2, 3) ;
- générer une tension entre le premier nœud (18) et le deuxième nœud (19), qui est proportionnelle à la dérivée temporelle du courant ;
- allumer le premier interrupteur (21) lorsque ladite tension est supérieure à une tension de seuil du premier interrupteur (21) ;
- éteindre le deuxième interrupteur (25) lorsque le premier interrupteur (21) est allumé ;
- arrêter la fourniture dudit courant,

le premier interrupteur (21), le deuxième interrupteur (25) et l'inducteur (29) étant dimensionnés de sorte que la fourniture du courant est arrêtée pour un objet conducteur étranger (12) ayant une résistance équivalente jusqu'à une valeur prédéfinie.

FIG. 1

FIG. 2

FIG. 3

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017046458 A1
- WO 2013036947 A2
- US 2015234363 A1
- EP 3425764 A1